(19) Europäisches Patentamt
European Patent Office
Office européen des brevets

(11) Numéro de publication: 0 272 182 B1

# (12) FASCICULE DE BREVET EUROPEEN

(45) Date de publication du fascicule du brevet: 16.08.90

(51) Int. Cl.[5]: C01B 3/32, B01J 23/70

(21) Numéro de dépôt: 87402772.5

(22) Date de dépôt: 07.12.87

## (54) Procédé de production d'hydrogène par reformage catalytique du méthanol à la vapeur d'eau.

(30) Priorité: 16.12.86 FR 8617712

(43) Date de publication de la demande: 22.06.88 Bulletin 88/25

(45) Mention de la délivrance du brevet: 16.08.90 Bulletin 90/33

(84) Etats contractants désignés: BE DE ES FR GB GR IT NL SE

(56) Documents cités:
FR-A- 2 181 795

CHEMICAL ABSTRACTS, vol. 106, no. 22, juin 1987, page 151, résumé no. 179002j, Columbus, Ohio, US; & JP-A-62 52 105 (KAO CORP.) 28-08-1985

(73) Titulaire: INSTITUT FRANCAIS DU PETROLE, 4, Avenue de Bois-Préau, F-92502 Rueil-Malmaison(FR)

(72) Inventeur: Vu, Quang Dang, 48 bis, Boulevard du Général Leclerc, F-92200 Neuilly(FR)
Inventeur: Davidson, Michel, 15, Avenue Marceau, F-78110 Le Vesinet(FR)
Inventeur: Durand, Daniel, 18, rue Michelet, F-92500 Rueil Malmaison(FR)
Inventeur: Courty, Philippe, 91, rue Condorcet, F-78800 Houilles(FR)

EP 0 272 182 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un procédé de production d'hydrogène par reformage catalytique du méthanol à la vapeur d'eau.

Le procédé produit de l'hydrogène avec, comme impureté principale, du dioxyde de carbone.

On sait que, à l'heure actuelle, la majeure partie de l'hydrogène utilisé dans le monde provient du reformage catalytique du gaz naturel.

Ce dernier n'est pas toujours disponible à l'endroit voulu. Aussi, pour des besoins locaux limités, on préfère partir de charges liquides plus facilement stockables telles que le méthanol.

La production de l'hydrogène à partir du méthanol est fondée sur la réaction bien connue (FR-1549 206 et 1599 852) de reformage du méthanol à la vapeur d'eau :

$CH_3OH + H_2O \rightleftharpoons CO_2 + 3H_2$(1)

qui peut théoriquement être mise en oeuvre en présence de l'un quelconque des catalyseurs déjà proposés pour les réactions inverses de synthèse du méthanol :

$CO + 2H_2 \rightleftharpoons CH_3OH$(2)

$CO_2 + 3H_2 \rightleftharpoons CH_3OH + H_2O$(3)

En pratique, toutefois, quand on cherche à réformer le méthanol, on assiste à une désactivation accélérée du système catalytique. La même observation a été faite par les auteurs du brevet belge n°884720 qui proposent d'y remédier soit par l'emploi de catalyseurs modifiés, moins actifs à basse température, soit par emploi d'une méthode de démarrage particulière, soit enfin par l'utilisation de deux lits successifs de catalyseur, l'un pour effectuer le craquage du méthanol selon la réaction (4) inverse de la réaction (2) :

$CH_3OH \rightleftharpoons CO + 2H_2$(4)

l'autre pour convertir le monoxyde de carbone obtenu :

$CO + H_2O \rightleftharpoons CO_2 + H_2$(5)

Il a maintenant été trouvé que la mise en oeuvre de ces mesures n'est pas nécessaire et qu'il suffit pour éviter la désactivation d'un catalyseur contenant du cuivre, d'ajouter une proportion critique de dioxyde de carbone aux réactifs, eau et méthanol, avant de les mettre en contact avec le catalyseur.

On sait que l'injection massive de $CO_2$ dans un reformage de méthanol à la vapeur d'eau est un moyen efficace bien que coûteux pour augmenter le rapport $CO/H_2$ du gaz de synthèse fabriqué.

Ainsi, le brevet belge déjà cité enseigne que, en faisant varier le rapport molaire $CO_2$ sur méthanol entre 0,8 et 2,4 on peut faire passer la teneur en CO du gaz fabriqué de 31 à 41% en volume environ, avec baisse simultanée du rendement en hydrogène.

L'objet de l'invention étant la production de l'hydrogène, il convient d'éviter au maximum la formation du monoxyde de carbone qui est très fortement consommatrice d'hydrogène, comme le montre l'équation (6) inverse de (5) :

$CO_2 + H_2 \rightleftharpoons CO + H_2O$(6)

Le procédé de l'invention résoud ce problème de la manière suivante :

On fait passer un mélange de méthanol, d'eau et de dioxyde de carbone au contact d'un catalyseur renfermant du cuivre, en lit fixe, dans une zone catalytique à une température comprise entre 150 et 400°C, de préférence entre 180 et 290°C, le rapport molaire du dioxyde de carbone au méthanol, à l'entrée de la zone catalytique, étant compris entre 0,001 et 0,2 de préférence entre 0,01 et 0,15.

Quand de l'hydrogène est présent, en même temps que du $CO_2$, le rapport molaire de l'hydrogène au méthanol, à l'entrée de la zone catalytique, est avantageusement de 0 à 3, de préférence de 0 à 1.

Une teneur en $CO_2$ trop faible et/ou une proportion excessive d'hydrogène ne permettent pas d'assurer une bonne stabilité au catalyseur au cuivre.

Une teneur en $CO_2$ trop forte est, par contre, préjudiciable à la productivité du procédé.

Selon une forme de réalisation préférée on opère entre 180 et 290°C, domaine où le rendement en hydrogène est maximum et où la présence de $CO_2$ se révèle très utile pour réduire ou supprimer la perte d'activité du catalyseur.

Le dioxyde de carbone, utilisé dans le procédé de l'invention peut être soit un gaz pur, soit un gaz riche en $CO_2$, et de préférence un gaz dont l'impureté principale est de l'hydrogène, par exemple un gaz formé de 25-100% $CO_2$ et 75-0% $H_2$ en moles, de préférence 60-100% $CO_2$ et 40-0% $H_2$ et plus particulièrement 65-85% $CO_2$ et 35-5% $H_2$.

On peut opérer sous une pression de par exemple 0,1 à 20 MPa, de préférence 0,2 à 10 MPa.

D'après l'équation (1), le rapport entre l'eau et le méthanol doit être égal à au moins une mole par mole, par exemple 1,1 à 10 moles par mole, de préférence 1,2 à 4 moles par mole.

La vitesse volumique horaire (V.V.H.) - rapport entre le débit liquide horaire en volume du méthanol et le volume de catalyseur - est comprise entre 0,1 et 30 et de préférence entre 0,2 et 10.

Le catalyseur renferme du cuivre, de préférence associé à un ou plusieurs autres éléments tels que le zinc, l'aluminium ou le chrome, sous forme d'oxydes mixtes ou encore du mélange en des proportions diverses des oxydes simples constituants. Une composition préférée comprend 50-75% CuO, 20-40% ZnO et 5-15% $Al_2O_3$, en poids.

Le catalyseur renferme de préférence d'autres éléments tels que le fer, le manganèse ou le cobalt.

En particulier, la présence d'oxyde de fer dans un mélange d'oxyde de cuivre et d'oxyde de chrome améliore de façon notable la productivité du système catalytique. Un catalyseur préféré renferme 40-75% CuO, 20-45% $Fe_2O_3$ et 5-25% $Cr_2O_3$, en poids .

Les catalyseurs peuvent être soit massiques, c'est-à-dire constitués par des oxydes des éléments actifs, soit supportés.

Leurs liants ou leurs supports peuvent être par exemple de la silice, de l'alumine, le mélange de ces deux matériaux, un support plus complexe tel que les aluminates à structure spinelle (aluminate de magnésium, de zinc, de fer ou de cobalt) ou à structure perowskite, (aluminates de terres rares des numéros atomiques 57 à 71 inclus) ou encore, être constitués d'oxydes mixtes à base de zircone ($ZrO_2$ - MgO, $ZrO_2$ - terres rares, etc...).

Certains de ces catalyseurs ont été décrits par

exemple dans les brevets FR 1549301, FR 1599852, US 4552861 et US 4596782).

La figure 1 illustre un premier mode de mise en oeuvre du procédé d'invention.

La figure 2 illustre une modification du mode de mise en oeuvre de la figure 1.

Du méthanol liquide est introduit par le conduit 1 dans l'unité de reformage ou dans le même temps, de l'eau liquide nécessaire au reformage est introduite par le conduit 3 dans le ballon 4 ou elle est éventuellement mélangée à de l'eau et du méthanol n'ayant pas réagi. Ce mélange aboutit par la ligne 5, la pompe 6 et la ligne 7 dans le conduit 1 ou il recontre le méthanol d'appoint.Ce conduit 1 aboutit à l'échangeur 2 dont le rôle est de vaporiser les charges liquides de l'unité.

L'ensemble des réactifs, vaporisé par 2, passe au surchauffeur 9 par le conduit 8.

A la sortie de 9, les charges sont amenées par le conduit 10 au réacteur 11.

Sur le conduit 10, débouche du dioxyde de carbone en provenance du conduit 12.

Le réacteur 11 est par exemple un réacteur échangeur dont les tubes sont remplis à l'intérieur par du catalyseur et régulés thermiquement à l'extérieur, par une circulation de fluide caloporteur.

On sait en effet, que la réaction (1) est une réaction globalement endothermique et que pour pouvoir reformer 1 kmole d'alcool, il faut lui fournir environ 50 000 kJoules.

On préfère opérer avec un T entre l'entrée et la sortie du (des) lit (s) catalytique (s) inférieur à 100°C, et de préférence inférieur à 50°C.

Du réacteur 11, les produits effluents formés principalement d'hydrogène, de gaz carbonique et d'une faible quantité de monoxyde de carbone d'eau et de méthanol non convertis, sortent par le conduit 13apour être amenés sur l'échangeur 9.

De 9 par le conduit 13b, ces produits sont amenés sur l'échangeur 14 où les réactifs non convertis sont recondensés.

Le mélange gaz-liquide parvient par le conduit 15 au ballon séparateur 4.

Dans le ballon séparateur 4, le condensat rejoint l'eau fraîche d'appoint pour être renvoyé au réacteur.

Les gaz non condensables sortent par le conduit 16, et pénètrent dans la colonne de lavage 17.

En haut de la colonne 17, on envoie par le conduit 18, un débit de solvant destiné à absorber le $CO_2$ contenu dans le gaz.

Le solvant est l'un quelconque des solvants connus pour cet usage, par exemple une solution de carbonate de métal alcalin ou une solution d'amine.

La colonne 17 est utilement munie d'un dispositif de contactage conventionnel tel que plateaux à perforations ou à valves, garnissage tel que les anneaux de Raschig ou de Pall, etc...

En haut de la colonne 17, le gaz, formé essentiellement d'hydrogène débarrassé du $CO_2$, sort par le conduit 19. Si l'on désire purifier davantage cet hydrogène, on peut le réchauffer dans l'échangeur 20 et le diriger par le conduit 21 sur le réacteur de méthanisation 22.

Dans ce réacteur, le CO, qui peut constituer en poison pour les emplois ultérieurs de l'hydrogène, est transformé en méthane et eau.

Cette eau est condensée par léchangeur 24 où les gaz arrivent par le conduit 23.

Le mélange gaz, plus condensat, sort de 24 par le conduit 25 qui débouche dans le séparateur 26. Le condensat est évacué par la ligne 26 a.

En haut de 26, l'hydrogène purifié est envoyé vers les utilisateurs par le conduit 27.

Le solvant chargé en $CO_2$ est envoyé par le conduit 28 dans la colonne 29 où il est régénéré par chauffage au moyen du rebouilleur 30.

Le $CO_2$ revaporisé par 30 remonte la colonne 29 et traverse l'échangeur 31 qui le débarrasse du solvant entraîné par condensation.

Il est finalement évacué de l'unité par le conduit 32.

Une partie de ce $CO_2$ est cependant prélevée au moyen du conduit de dérivation 33.

Ce $CO_2$ est repris par le compresseur 34 pour être envoyé par le conduit 12 dans le réacteur 15, en mélange avec la charge fraîche.

Le solvant régénéré, rassemblé dans le fond de la colonne 29, passe par le conduit 35, est repris par la pompe 36 qui l'envoie par le conduit 37 sur le refroidisseur 38.

De 38, il rejoint la colonne d'absorption 17 par le conduit 18.

La chaleur nécessaire à la réaction endothermique de reformage peut être fournie par un fluide caloporteur dont la circulation est assurée par la pompe 39.

De 39, par le conduit 40, le fluide vient vaporiser les charges liquides à travers l'échangeur 2.

De 2, par le conduit 41, il arrive au four 42 d'où il sort réchauffé par le conduit 43.

Dans 43, le fluide se divise en deux. Une partie par 44 vient chauffer directement le réacteur 11.

Une deuxième partie vient sur le préchauffeur de méthanisation 20 puis rejoint ensuite le réacteur 11 par l'intermédiaire du conduit 45.

Dans l'unité ainsi décrite, le $CO_2$ nécessaire à la stabilité du catalyseur est injecté dans le réacteur 11 au moyen d'un compresseur 34.

C'est un appareil, coûteux à l'acquisition, et qui demande une surveillance constante, difficile à assurer quand il s'agit de capacités de faible importance.

Une variante du procédé est représentée sur la figure 2.

Dans cette variante, au moins une partie du méthanol du conduit 1 est envoyée d'abord dans la colonne 47 équipée de deux zones de contactage gaz-liquide 48 et 49.

Le méthanol frais amené par 1, arrose la zone de contactage 48 traversée de bas en haut par le mélange de gaz brut, débarrassé au préalable des condensats liquides au moyen du ballon séparateur 4.

La deuxième zone de contactage gaz-liquide 49 placée au-dessus de 48 est arrosée par au moins une partie de l'eau d'appoint frais en provenance du conduit 3.

La zone de contactage 48 a pour but de saturer

en $CO_2$ les liquides de charge fraîche méthanol et eau.

La zone de contactage 48 a un double but : saturer partiellement en $CO_2$, l'eau fraîche d'appoint et capter les vapeurs de méthanol entraînées par ce gaz lors du contactage gaz liquide dans la zone 48.

Les zones de contactage 48,49 peuvent renfermer par exemple, des plateaux perforés ou à valves, ou un garnissage en anneaux Raschig ou de Pall etc.

Sur la figure 2, la colonne 47 est montée directement sur le dessus du ballon 4, on peut cependant réaliser 4 et 47 en éléments distincts reliés par des conduits adéquats.

Les liquides collectés sont, au moins en partie, envoyés au réacteur 11.

Selon une variante la colonne 47 comporte une zone de lavage dans laquelle le gaz effluent est lavé par un mélange eau + méthanol, lequel peut être constitué par la charge réactive fraîche. Cette charge dissout du dioxyde de carbone et est ensuite envoyée au réacteur de réformage du méthanol.

On peut également faire barboter les gaz effluent dans une phase liquide formée de méthanol, d'eau ou de mélange méthanol + eau.

EXEMPLE 1 (exemple comparatif sans $CO_2$).

Un catalyseur classique de synthèse du méthanol est choisi avec la composition pondérale suivante :

| OXYDES | % poids |
|---|---|
| CuO | 61,0 |
| $Al_2O_3$ | 7,85% pds |
| ZnO | 31,15 |

70 cm3 de ce catalyseur sont chargés dans un réacteur tubulaire de diamètre 20 mm et sur une hauteur de lit de 250 mm.

Le catalyseur est réduit à pression atmosphérique avec un mélange à 3% d'hydrogène dans l'azote entre 100 et 270°C pendant 72 heures.

Après l'étape de réduction, l'unité est pressurisée à 3MPa. On injecte ensuite, à 270°C, le mélange réactionnel eau-méthanol (rapport molaire $H_2O/CH_3OH$= 1,5) à un débit de 105 cm3/heure; la vitesse spatiale liquide étant de 1,5$h^{-1}$. Le lit catalytique est maintenu à 270°C (entrée) et 260°C (sortie).

La composition % volume du gaz effluent est la suivante:

| Constituants | % volume |
|---|---|
| CO | 1,7 |
| $CO_2$ | 23,7 |
| $CH_4$ | 0,1 |
| $CH_3OH$ | 0,1 |
| $H_2$ | 74,4 |

Le taux de conversion du méthanol après 24 heures de fonctionnement est de 88% mais, après 10 jours de fonctionnement il n'est plus que de 78%.

Dans l'exemple 1, de même que dans les exemples suivants 2 à 6, le rendement en hydrogène a été de 97%, calculé par rapport au méthanol converti.

EXEMPLE 2.

Le catalyseur et les conditions opératoires restant les mêmes que celles de l'exemple 1, on injecte à co-courant avec la charge eau-méthanol, du dioxyde de carbone, à un débit horaire de 2 litres/heure. La pression partielle du gaz carbonique à l'entrée du lit catalytique est de 0,063 MPa et les rapports molaires $CO_2/CH_3OH$ et $CO_2$/ réactifs sont respectivement égaux à 0,0536 et à 0,0210. Dans ces conditions la conversion du méthanol (87% au premier jour) s'est établie à 86% au troisième jour et n'a ensuite quasiment pas varié jusqu'à la fin de l'essai (dixième jour).

EXEMPLE 3.

On opère dans les mêmes conditions que dans l'exemple 2, mais avec un débit de $CO_2$ de 7 litres/heure, soit à l'entrée du réacteur :

. une pression partielle de $CO_2$ de : 0,209 MPa
. un rapport molaire $CO_2/CH_3OH$ de : 0,1876
. un rapport molaire $CO_2$/ réactifs de 0,0698

le taux de conversion du méthanol s'est quasiment stabilisé à 92%, au dixième jour de test.

EXEMPLE 4.

On répète la même expérience que celle de l'exemple 1, mais en introduisant en même temps que la charge eau-méthanol un mélange $H_2$-$CO_2$ à 39,1% volume en hydrogène et 60,9% volume en $CO_2$ et sous un débit de 11,5 l/h.

Les valeurs des pressions partielles et des rapports molaires sont les suivantes :

$pCO_2$ = 0,2 MPa $PH_2$ = 0,129 MPa
$CO_2/H_2$ = 1,556 $CO_2/CH_3OH$ = 0,1876
$CO_2/H_2O$ = 0,125

On constate, par comparaison avec l'exemple 1, une amélioration de la stabilité (chute de la conversion de 0,25 unité par jour environ au lieu de 1 unité) et de l'activité catalytique (94% de conversion du méthanol au lieu de 88% au premier jour). Cependant, cet effet stabilisant de l'activité catalytique par le mélange $H_2$-$CO_2$ est sensiblement inférieur à celui du $CO_2$ seul (exemple 3).

EXEMPLE 5.

On opère dans les mêmes conditions que celles de l'exemple 1 en introduisant toutefois avec les réactifs un mélange $H_2$-$CO_2$ à 75,0% molaire d'hydrogène et 25,0% de $CO_2$ sous un débit de 8 l/h.

Les valeurs des différents rapports molaires sont les suivantes : $CO_2/H_2$ = 0,333$CO_2/CH_3OH$ = 0,0536

La conversion du méthanol est de 89% après 24 heures. Elle chute ensuite en moyenne de 0,75 point

par jour. Ceci montre que l'effet stabilisant de l'injection d'un mélange $H_2$-$CO_2$ au rapport molaire $H_2/CO_2$ de 3 est beaucoup plus faible que celui obtenu avec des mélanges plus riches en $CO_2$ (exemples 2 et 3).

EXEMPLE 6

Avec un catalyseur de composition pondérale :

CuO = 50,32
$Fe_2O_3$ = 33,82 % poids
$Cr_2O_3$ = 15,86

on réalise le même type d'essai que dans l'exemple 2 à la différence que la température de réaction est de 265°C et que le débit de $CO_2$ est de 5 l/h. Les taux de conversion du méthanol sont donnés dans le tableau ci- après et comparés à ceux obtenus en l'absence de $CO_2$.

| | Taux de conversion du méthanol (%) | |
|---|---|---|
| | 1er jour | 10è jour |
| sans $CO_2$ | 88,6 | 79,2 |
| sans $CO_2$ | 88,1 | 87,3 |

Comme dans le cas du catayseur Cu-Al-Zn on observe, pour le catalyseur Cu Fe Cr, l'effet bénéfique de l'injection de $CO_2$ en tête de réacteur, sur la stabilité et sur l'activité catalytique.

**Revendications**

1.- Procédé de production d'hydrogène par reformage catalytique du méthanol à la vapeur d'eau, caractérisé en ce qu'on fait passer un mélange de méthanol, d'eau et de dioxyde de carbone au contact d'un catalyseur renfermant du cuivre, en lit fixe, dans une zone catalytique, à une température comprise entre 150 et 400°C, le rapport molaire du dioxyde de carbone au méthanol, à l'entrée de la zone catalytique, étant compris entre 0,001 et 0,2 et le rapport eau/méthanol étant d'au moins 1 mole par mole.

2.- Procédé selon la revendication 1 dans lequel le rapport molaire eau/méthanol est de 1,1 à 10 moles par mole.

3.- Procédé selon la revendication 1 ou 2, dans lequel le mélange de méthanol, d'eau et de dioxyde de carbone renferme en outre de l'hydrogène et le rapport molaire de l'hydrogène au méthanol, à l'entrée de la zone catalytique, est de 0 à 3.

4.- Procédé selon l'une des revendications 1 à 3, dans lequel le rapport molaire du dioxyde de carbone au méthanol, à l'entrée de la zone catalytique, est compris entre 0,01 et 0,15.

5.- Procédé selon l'une des revendications 1 à 4, dans lequel la température du catalyseur est de 180 à 290°C.

6.- Procédé selon l'une des revendications 1 à 5, dans lequel du dioxyde de carbone et de l'hydrogène sont simultanément présents dans le mélange des réactifs, en proportions de 25-100% $CO_2$ et 75-0% $H_2$.

7.- Procédé selon l'une des revendications 1 à 6 dans lequel du dioxyde de carbone et de l'hydrogène sont simultanément présents dans le mélange des réactifs, en proportions de 60-100% $CO_2$ et 40-0% $H_2$.

8.- Procédé selon l'une des revendications 1 à 7, dans lequel du dioxyde de carbone et de l'hydrogène sont simultanément présents dans le mélange des réactifs, en proportions de 65-95% $CO_2$ et 35-5% $H_2$.

9.- Procédé selon l'une des revendications 1 à 8, dans lequel l'écart de température entre l'entrée et la sortie du ou des lits catalytiques est inférieur à 50°C.

10.- Procédé selon l'une des revendications 1 à 9, dans lequel on refroidit l'effluent de la zone catalytique, de manière à condenser l'eau et le méthanol n'ayant pas réagi, on sépare le condensat résultant du gaz non condensé, renfermant de l'hydrogène et du dioxyde de carbone, on lave le gaz non condensé d'abord par au moins une partie du méthanol liquide frais puis par au moins une partie de l'eau liquide fraîche, on décharge le gaz résultant riche en hydrogène, et on envoie à la zone catalytique au moins une partie du condensat et au moins une partie des phase liquides résultant des lavages du gaz par le méthanol liquide et par l'eau liquide.

11.- Procédé selon l'une des revendications 1 à 9, dans lequel on refroidit l'effluent de la zone catalytique, de manière à condenser l'eau et le méthanol n'ayant pas réagi, on sépare le condensat résultant du gaz non condensé, renfermant de l'hydrogène et du dioxyde de carbone, on lave le gaz non condensé par un mélange d'eau et de méthanol frais, on décharge le gaz résultant riche en hydrogène et on envoie à la zone catalytique au moins une partie du condensat et au moins une partie de la phase liquide résultant du lavage du gaz par le mélange d'eau et de méthanol frais.

12.- Procédé selon l'une des revendications 1 à 10, dans lequel le catalyseur renferme 40-75% CuO, 20-45% $Fe_2O_3$ et 5-25% $Cr_2O_3$ en poids.

**Claims**

1. Process for producing hydrogen by catalytic reforming of methanol with steam, characterized in that a mixture of methanol, water and carbon dioxide is passed in contact with a catalyst containing copper, in a fixed bed, in a catalytic zone, at a temperature ranging from 150 to 400°C, the molar ratio of the carbon dioxide to the methanol, at the input of the catalytic zone, being of 0.001 to 0.2 and the water/methanol ratio being at least 1 mole per mole.

2. Process according to claim 1 wherein the molar ratio water/methanol is 1.1 to 10 moles per mole.

3. Process according to claim 1 or 2, wherein the mixture of methanol, water and carbon dioxide contains in addition hydrogen and the molar ratio of the hydrogen to the methanol, at the input of the catalytic zone, is 0 to 3.

4. Process according to one of claims 1 to 3, wherein the molar ratio of the carbon dioxide to the

methanol, at the input of the catalytic zone, is ranging from 0.01 to 0.15.

5. Process according to one of claims 1 to 4, wherein the temperature of the catalyst is 180 to 290°C.

6. Process according to one of claims 1 to 5, wherein carbon dioxide and hydrogen are simultaneously present in the reagent mixture, in proportions of 25–100% $CO_2$ and 75–0% $H_2$.

7. Process according to one of claims 1 to 6, wherein carbon dioxide and hydrogen are simultaneously present in the mixture of reagents, in proportions of 60–100% $CO_2$ and 40–0% $H_2$.

8. Process according to one of claims 1 to 7, wherein carbon dioxide and hydrogen are simultaneously present in the mixture of reagents, in proportions of 65–95% $CO_2$ and 35–5% $H_2$.

9. Process according to one of claims 1 to 8, wherein the difference in temperature between the input and the output of the one or more catalytic beds is less than 50°C.

10. Process according to one of claims 1 to 9, comprising cooling the effluent from the catalytic zone, so as to condense the unreacted water and methanol separating the resultant condensate from the uncondensed gas, containing hydrogen and carbon dioxide, washing the uncondensed gas first by at least one portion of the fresh liquid methanol and then by at least one portion of the fresh liquid water, discharging the resultant hydrogen rich gas and sending to the catalytic zone at least a portion of the condensate and at least a portion of the liquid phases resulting from the washings of the gas by the liquid methanol and by the liquid water.

11. Process according to one of claims 1 to 9, comprising cooling the effluent from the catalytic zone, so as to condense the water and the methanol which have not reacted, separating the resultant condensate from the uncondensed gas, containing hydrogen and carbon dioxide, washing the uncondensed gas by a mixture of water and fresh methanol, discharging the resultant hydrogen-rich gas and sending to the catalytic zone at least a portion of the condensate and at least a portion of the liquid phase resulting from the washing of the gas by the mixture of water and fresh methanol.

12. Process according to one of claims 1 to 10, wherein the catalyst contains 40–75% CuO, 20–45% $Fe_2O_3$ and 5–25% $Cr_2O_3$ by weight.

**Patentansprüche**

1. Verfahren zur Erzeugung von Wasserstoff durch katalytisches Wasserdampfreformieren des Methanols, dadurch gekennzeichnet, daß man ein Gemisch aus Methanol, Wasser und Kohlendioxid in Kontakt mit einem Kupfer enthaltenden Katalysator in festem Bett in einer katalytischen Zone bei einer Temperatur zwischen 150 und 400°C strömen läßt, wobei das Molverhältnis des Kohlendioxids zum Methanol am Eintritt in die katalytische Zone zwischen 0.001 und 0,2 und das Verhältnis Wasser/Methanol bei wenigstens 1 Mol pro Mol beträgt.

2. Verfahren nach Anspruch 1, bei dem das Molverhältnis Wasser/Methanol 1,1 bis 10 Mol pro Mol beträgt.

3. Verfahren nach Anspruch 1 oder 2, bei dem das Gemisch aus Methanol, Wasser und Kohlendioxid im übrigen Wasserstoff einschließt und das Molverhältnis des Wasserstoffs zu Methanol am Eintritt in die katalytische Zone bei 0 bis 3 liegt.

4. Verfahren nach einem der Ansprüche 1 bis 3, dadurch gekennzeichnet, daß das Molverhältnis des Kohlendioxids zum Methanol am Eintritt in die katalytische Zone zwischen 0,01 und 0,15 beträgt.

5. Verfahren nach einem der Ansprüche 1 bis 4, bei dem die Temperatur des Katalysators 180 bis 290°C beträgt.

6. Verfahren nach einem der Ansprüche 1 bis 5, bei dem Kohlendioxid und Wasserstoff gleichzeitig im Gemisch der Reaktionsteilnehmer in Anteilen von 25–100% $CO_2$ und 75–0% $H_2$ vorhanden sind.

7. Verfahren nach einem der Ansprüche 1 bis 6, bei dem Kohlendioxid und Wasserstoff gleichzeitig im Gemisch der Reaktionsteilnehmer in Anteilen von 60–100% $CO_2$ und 40–0% $H_2$ vorhanden sind.

8. Verfahren nach einem der Ansprüche 1 bis 7, bei dem Kohlendioxid und Wasserstoff gleichzeitig im Gemisch der Reaktionsteilnehmer in Anteilen von 65–95% $CO_2$ und 35–5% $H_2$ vorhanden sind.

9. Verfahren nach einem der Ansprüche 1 bis 8, bei dem die Temperaturabweichung zwischen Eintritt und Austritt des oder der katalytischen Betten niedriger als 50°C liegt.

10. Verfahren nach einem der Ansprüche 1 bis 9, bei dem man den Abstrom aus der katalytischen Zone derart kühlt, daß das Wasser und das nicht umgesetzte Methanol kondensieren, daß man das resultierende Kondensat vom nicht kondensierten Gas, welches Wasserstoff und Kohlendioxid enthält, trennt, man das nicht kondensierte Gas zunächst durch wenigstens einen Teil frischen flüssigen Methanols dann durch wenigstens einen Teil frischen flüssigen Wassers trennt, das an Wasserstoff reiche resultierende Gas austrägt und man an die katalytische Zone wenigstens einen Teil des Kondensats und wenigstens einen Teil der flüssigen Phasen schickt, die aus den Waschvorgängen des Gases durch das flüssige Methanol und das flüssige Wasser resultieren.

11. Verfahren nach einem der Ansprüche 1 bis 9, bei dem man den Abstrom aus der katalytischen Zone derart kühlt, daß das Wasser und das nicht umgesetzte Methanol kondensieren, man das resultierende Kondensat vom nicht kondensierten Gas, welches Wasserstoff und Kohlendioxid enthält, trennt, man das nicht kondensierte Gas durch ein Gemisch aus Wasser und frischem Methanol wäscht, man das an Wasserstoff reiche Gas austrägt und an die katalytische Zone wenigstens einen Teil des Kondensats und wenigstens einen Teil der flüssigen Phase schickt, die aus dem Waschen des Gases durch das Gemisch aus Wasser und frischem Methanol resultiert.

12. Verfahren nach einem der Ansprüche 1 bis 10, bei dem der Katalysator 40–75% CuO, 20–45% $Fe_2O_3$ und 5–25% $Cr_2O_3$ (Gew.-%) enthält.

FIG.1

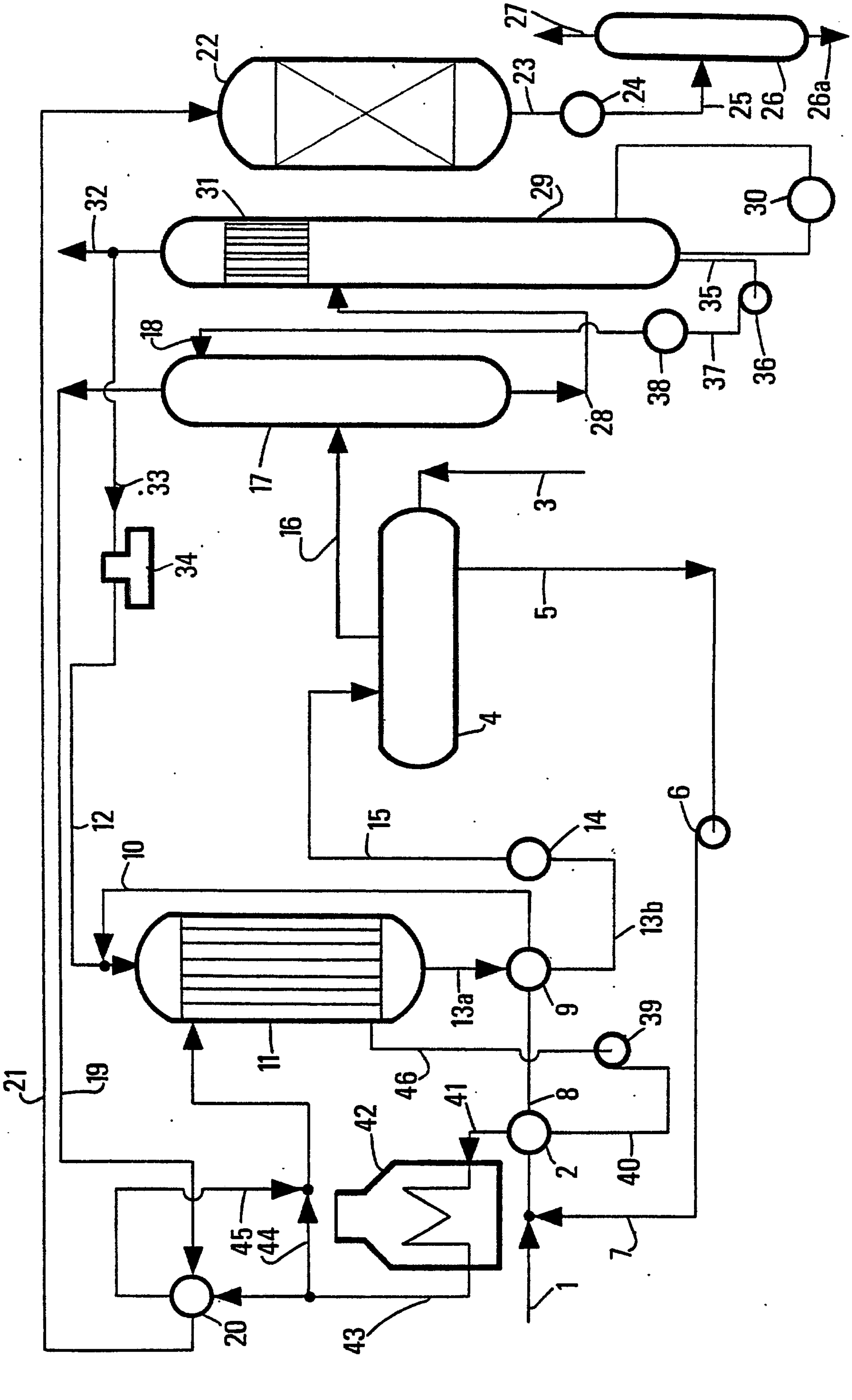
1
2
3
4
5
6
7
8
9
10
11
12
13a
13b
14
15
16
17
18
19
20
21
22
23
24
25
26
26a
27
28
29
30
31
32
33
34
35
36
37
38
39
40
41
42
43
44
45
46

FIG.2

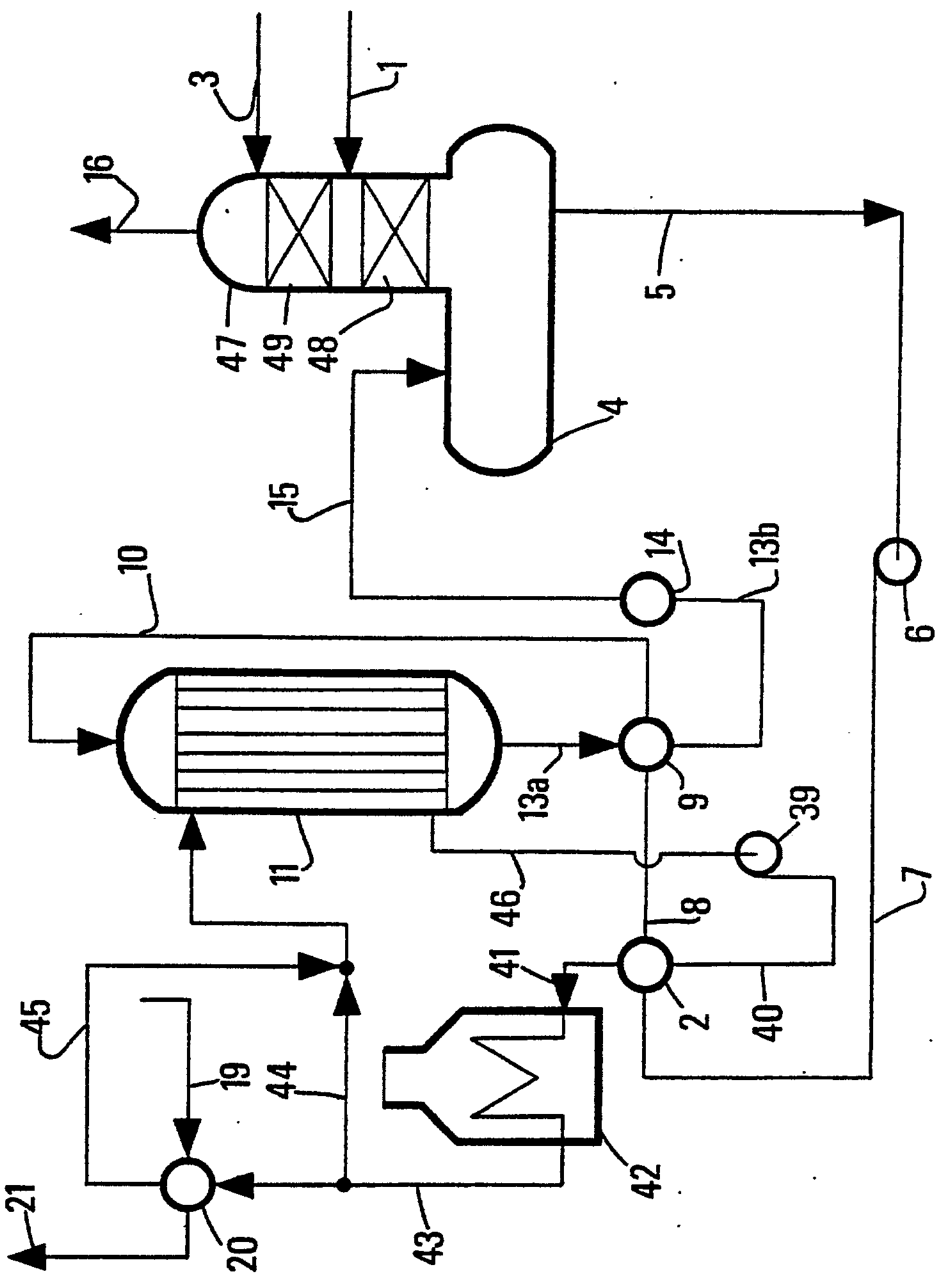
1
2
3
4
5
6
7
8
9
10
11
13a
13b
14
15
16
19
20
21
39
40
41
42
43
44
45
46
47
48
49